# EUROPEAN PATENT SPECIFICATION

(11) **EP 1 144 763 B1**
(45) Date of publication and mention of the grant of the patent: **21.04.2004**
(21) Application number: 99959434.4
(22) Date of filing: 26.11.1999
(51) Int. Cl.: E02B 15/04

(54) **DEVICE FOR REMOVING OIL OR ANY OTHER FATTY SUBSTANCE FROM THE SURFACE OF A LIQUID IN A BASIN**
VORRICHTUNG ZUM ENTFERNEN VON ÖL ODER ANDEREN FETTIGEN SUBSTANZEN VON DER OBERFLÄCHE EINER FLÜSSIGKEIT IN EINEM BECKEN
DISPOSITIF POUR EVACUER L'HUILE OU TOUTE AUTRE SUBSTANCE GRASSE DEPUIS LA SURFACE D'UN LIQUIDE DANS UN BASSIN

(30) Priority: 26.11.1998 FI 980516 U
(43) Date of publication of application: 17.10.2001
(73) Proprietor: Oy LMP Patents Ltd., AB, 07900 Loviisa (FI)
(72) Inventor: NORDSTRÖM, Martti-R., FIN-07900 Loviisa (FI)
(74) Representative: Nordin, Leif
(86) International application number: PCT/FI1999/000982
(87) International publication number: WO 2000/031348

(56) References cited:
- FI-B- 70 443
- GB-A- 1 544 659
- US-A- 1 860 819
- US-A- 3 338 414
- US-A- 4 681 680
- US-A- 5 681 458

## Description

The invention relates to a device for removing oil, any other fatty substance or impurities from the surface of a liquid in a basin, the device comprising a rotatable drum having annularly disposed bristles on its surface, and a comb-shaped scraper means mounted relative to the drum so that the teeth of the scraper means extend inbetween the annular bristles in the tangential direction of the drum, a collector means disposed in connection with the scraper means and into which the substance detached by the scraper from the bristles is directed, the drum being disposed in a casing-like body open on at least one side so as to allow liquid to enter the casing into contact with the drum bristles.

The conductor and hydraulic oils commonly used in industries get admixed with the cutting fluids during daily working routines. When the machines stop, the conductor oil forms a thick uniform oil film on the surface of the cutting fluid. This film prevents oxygen from reaching the cutting fluid and the nitrogen compounds thus produced will deteriorate the cutting fluid rapidly. It is vital to remove the oil film. Removal of the oil film allows unnecessarily frequent replacements of the expensive cutting fluids to be avoided.

The object of the present invention is to provide specifically a device by means of which the harmful surface layer mentioned above can be removed and which at the same time has a construction which is straightforward and easy to install relative to the tank or basin design, while being also adjustable so as to achieve optimal collecting conditions.

The invention is based in the finding that, with some modifications, devices of the type described in the preamble, which have been conventionally used to collect oil from the sea water, in harbour areas etc. (cf. FI patent specification 70443), can advantageously be used for the present purpose as well.

The invention is characterised by the feature that the device is adapted for attachment or suspension at the edge of the basin and that it is equipped with adjusting means for vertical adjustment relative to the liquid level in the basin, and that the casing-like body comprises laterally outwardly directed liquid discharge nozzles, which are disposed substantially at the liquid level and generate a surface current in the basin so that fresh surface layer is continuously absorbed into the device as the drum rotates.

The remaining characteristics of the invention are defined in claims 2 to 4.

The invention and its other features and advantages are explained in greater detail as embodiment examples below, with reference to the accompanying drawings, in which
- figure 1: is a perspective view of an embodiment of the device in accordance with the invention
- figure 2: shows the construction of the bristle drum and
- figures 3 and 4: show the construction of the cleansing comb.

The device of the invention has principally the shape of a casing 1 open on one side 2. The casing is preferably made by welding from aluminium sheet or stainless steel.

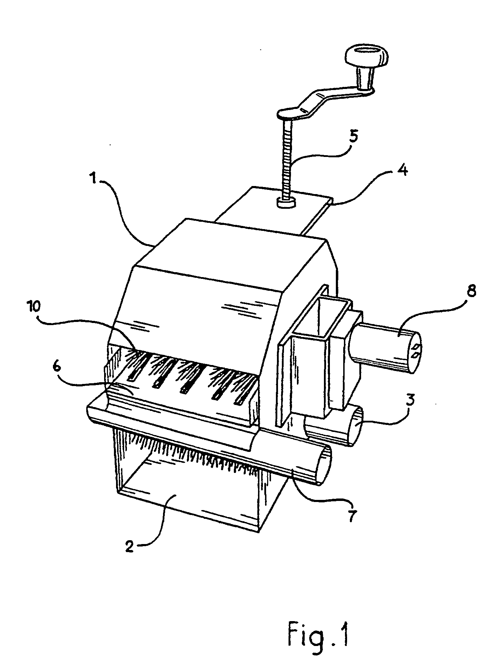

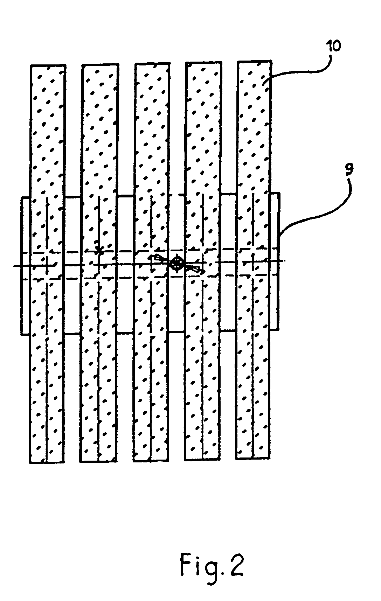

A drum comprising a cylindrical central part 9 made of e.g. nylon and bristles 10 annularly attached to this have been mounted on bearings transversely within the casing. The drum desing is shown in figure 2 and the drum bristles 10 are partially shown also in figure 1.

The drum is rotated by an electric motor 8, such as a direct-current motor, attached to the casing.

The bristle drum is rotated so as to absorb the surface water, which entrains the oil film formed on the surface into the collector device.

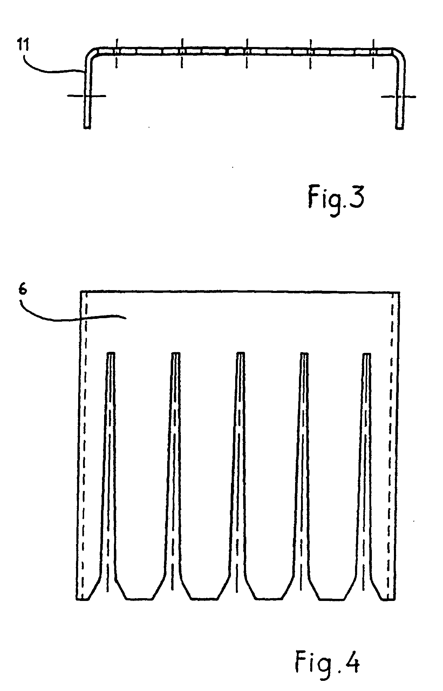

The cleansing comb 6 is illustrated in figures 3 and 4. On its curved side 11, the comb is attached to the sides of the casing 1 and the peaks of the comb extend in a manner known *per se* inbetween the bristles 10 of the drum, so that the comb clears the bristles by forcing away oil and fat as the drum rotates.

The removed oil flows over the rear part of the comb into a collector pipe 7 open at its upper end, from where it is further directed by means of a not-represented hose and possibly a pump to a receiver.

The casing has been designed so as to be easily attached for instance to the edge of a cutting fluid basin. To this end, the rear side of the casing comprises a projection 4, into which a vertical threaded bar 5 equipped with a lever has been pivoted. The lower end of the threaded bar, not shown in the figure, may be supported for instance by a horizontal flange provided at the outer edge of the basin, allowing the vertical position of the device to be adjusted with the threaded bar 5 relative to the liquid level in the basin.

For the device to be operative, it is vital that the lower edge of the casing 1 is located adequately below the liquid level to allow the lower parts of the bristles 10 to be cleaned within the liquid.

In the receiver, the device generates a surface current based on absorption towards the collector device generated by the rotational movement of the bristles. In terms of the desired current, it is also vital that the casing sides comprise outwardly directed discharge nozzles 3 below the liquid level, the nozzles producing circulation in the cutting fluid basin so as to allow oxygenation of the cutting fluid and to prevent the production of harmful nitrogen compounds.

The device in accordance with the invention is practically maintenance-free, since it does not comprise separate filters requiring regular cleaning.

## Claims

1. A device for removing oil, any other fatty substance or impurities from the surface of a liquid in a basin, the device comprising a rotatable drum (9) with annularly disposed bristles (10) on its surface and a comb-like scraper means (6) disposed relative to the drum so that the teeth of the scraper means extend inbetween the bristles (10) in the tangential direction of the drum, a collector means (7) disposed in connection with the scraper means, the substance detached from the bristles by the scraper means being directed to the collector means, the drum being located in a casing-like body (1) open at least on one side (2) so as to allow liquid to enter the casing and to contact the bristles (10) of the drum, **characterised in that** the device is adapted for attachement or suspension at the edge of a basin and is equipped with adjusting means (5) for vertical adjustment relative to the liquid level in the basin, and that the casing-like body comprises laterally outwardly directed liquid discharge nozzles (3) located substantially at the liquid level, in order to generate a surface current in the basin and to continuously absorb fresh surface layer into the device as the drum rotates.

2. A device as defined in claim 1, **characterised in that** an electric motor (8) has been connected to the drum (9) in order to rotate it.

3. A device as defined in claim 1, **characterised in that**, for vertical adjustment of the device relative to the liquid level, a vertical threaded bar (5) has been provided, which is supported directly or intermediately on the horizontal surface in the basin.

4. A device as defined in claim 1 or 3, **characterised in that** an electric motor is provided for vertical adjustment of the device, the device comprising a float known *per se* to control the electric motor.

## Patentansprüche

1. Vorrichtung zum Entfernen von Öl, irgendwelchen anderen fettigen Substanzen oder Verunreinigungen von der Oberfläche einer Flüssigkeit in einem Becken, wobei die Vorrichtung eine drehbare Trommel (9) mit ringförmig angeordneten Borsten (10) an ihrer Oberfläche und eine kammähnliche Abstreifereinrichtung (6), die so relativ zu der Trommel angeordnet ist, dass Zähne der Abstreifereinrichtung sich zwischen die Borsten (10) in die tangentiale Richtung der Trommel erstrecken, und eine Sammeleinrichtung (7), aufweist, die in Verbindung mit der Abstreifereinrichtung angeordnet ist, wobei die Substanz, die durch die Abstreifereinrichtung von den Borsten abgelöst worden ist, auf die Sammeleinrichtung gerichtet wird, wobei die Trommel in einem gehäuseähnlichen Körper (1) angeordnet ist, der wenigstens an einer Seite (2) offen ist, um so Flüssigkeit in das Gehäuse eindringen und die Borsten (10) der Trommel kontaktieren zu lassen,
**dadurch gekennzeichnet,**
**dass** die Vorrichtung zum Anbringen oder zum Aufhängen an einer Kante des Beckens angepasst ist und mit einer Einstelleinrichtung (5) zur vertikalen Einstellung relativ zu dem Flüssigkeitspegel in dem Becken ausgerüstet ist und dass der gehäuseähnliche Körper seitlich nach außen gerichtete Flüssigkeitsabgabedüsen (3) aufweist, die im wesentlichen an dem Flüssigkeitspegel angeordnet ist, um einen Oberflächenstrom in dem Becken zu erzeugen und ständig eine frische Oberflächenschicht in die Vorrichtung zu absorbieren, wenn die Trommel rotiert.

2. Vorrichtung nach Anspruch 1,
**dadurch gekennzeichnet,**
**dass** ein Elektromotor (8) mit der Trommel (9) zum Drehen derselben verbunden worden ist.

3. Vorrichtung nach Anspruch 1,
**dadurch gekennzeichnet,**
**dass** zur vertikalen Einstellung der Vorrichtung relativ zu dem Flüssigkeitspegel eine vertikale mit Gewinde versehene Stange (5) vorgesehen ist, welche direkt oder indirekt auf der horizontalen Oberfläche in dem Becken abgestützt ist.

4. Vorrichtung nach Anspruch 1 oder 3,
**dadurch gekennzeichnet,**
**dass** ein Elektromotor zur vertikalen Einstellung der Vorrichtung vorgesehen ist, wobei die Vorrichtung einen an sich bekannten Schwimmer aufweist, um den Elektromotor zu steuern.

## Revendications

1. Un dispositif pour l'évacuation de l'huile ou de toute autre substance ou impureté grasse depuis la surface d'un liquide dans un bassin, ce dispositif comprenant un tambour rotatif (9) comportant des poils (10) disposés annulairement sur sa surface et des moyens de raclage (6) en forme de peigne disposés par rapport au tambour d'une manière telle que les dents des moyens de raclage s'étendent entre les poils (10) en direction tangentielle par rapport au tambour, des moyens de ramassage (7) disposés de manière à être associés aux moyens de raclage, la substance détachée des poils par les moyens de raclage étant dirigée vers les moyens de ramassage, le tambour est situé dans un corps en forme de boîtier (1) ouvert sur au moins un côté latéral (2) de manière à permettre au liquide de pénétrer dans le boîtier et de venir au contact des poils (10) du tambour, dispositif **caractérisé en ce qu'**il est destiné à être fixé ou suspendu sur le bord d'un bassin et qu'il est équipé de moyens de réglage (5) en vue d'un réglage vertical par rapport au niveau du liquide dans le bassin et **en ce que** le corps en forme de boîtier comprend des buses d'évacuation de liquide latérales dirigées vers l'extérieur (3), situées pratiquement au niveau du liquide, en vue de créer un courant superficiel dans le bassin et d'absorber de manière continue la couche fraîche de la surface dans le dispositif à mesure que le tambour tourne.

2. Un dispositif selon la revendication 1, **caractérisé en ce qu'**un moteur électrique (8) est connecté au tambour (9) en vue de le faire tourner.

3. Un dispositif selon la revendication 1, **caractérisé en ce que**, en vue du réglage vertical du dispositif par rapport au niveau du liquide, une barre filetée verticale (5) a été prévue pour être supportée directement ou par u moyen intermédiaire sur la surface horizontale du bassin.

4. Un dispositif selon la revendication 1 ou 3, **caractérisé en ce qu'**un moteur électrique est prévu en vue du réglage vertical du dispositif, le dispositif comprenant un flotteur connu en lui-même destiné à contrôler le moteur électrique.
